Europäisches Patentamt

European Patent Office

Office européen des brevets

(11) Publication number: **0 109 005**
**B1**

# (12) EUROPEAN PATENT SPECIFICATION

(45) Date of publication of patent specification: **10.06.87**

(51) Int. Cl.⁴: **H 04 N 1/40**

(21) Application number: **83110955.8**

(22) Date of filing: **03.11.83**

(54) Method of providing a halftone image.

(30) Priority: **08.11.82 US 440114**

(43) Date of publication of application:
**23.05.84 Bulletin 84/21**

(45) Publication of the grant of the patent:
**10.06.87 Bulletin 87/24**

(84) Designated Contracting States:
**DE FR GB**

(56) References cited:
**EP-A-0 033 106**

(73) Proprietor: **International Business Machines
Corporation
Old Orchard Road
Armonk, N.Y. 10504 (US)**

(72) Inventor: **Pennebaker, William Boone
R.D. No. 1
Carmel New York 10512 (US)**

(74) Representative: **Richards, John Peter
IBM United Kingdom Limited Intellectual
Property Department Hursley Park
Winchester Hampshire SO21 2JN (GB)**

**Description**

The invention relates to a method of providing a halftone image.

Picture elements (pixels) may have simple binary configurations, typified by the off/on lamp display of the theater marquee, in which each pixel may have one of only two values, "black" (off) or "white" (on). However, pixel configurations have progressed beyond this stage to include halftone images wherein each individual pixel includes multiple side-by-side tone components which may be selectively on (white) or off (black), giving the ability to provide, in effect, average pixel tones which are intermediate the all white or all black of the simple binary lamp.

A typical two-bit binary coding for a three-component pixel in the prior art is:

| Bit values | Pixel tone components | | |
|---|---|---|---|
| | (1) | (2) | (3) |
| 0,0 | White | White | White (all white) |
| 0,1 | White | Black | White (middle third black) |
| 1,0 | Black | Black | White (left two thirds black) |
| 1,1 | Black | Black | Black (all black) |

Multi-component pixel configurations may define displays with many variations of colour and grey tone shading, and resolution can be increased as a function of increased use of storage. It is therefore to be understood that the terms "black" and "white" are used herein simply for convenience to mean low (or zero) and high levels of colour (including white) respectively.

Multi-component pixel configurations permit the production of complex displays with midtones ranging from black through several colours and shades of grey to white. However, multi-component pixel configurations have a tendency to develop optical aberrations due to random patterns in open fields and at the transition edges where tones change, for example where black meets white. Such aberrations may appear as lines or stairsteps and are generally undesirable; even in the absence of other aberrational optical patterns it is an undesirable aberration for a black-white transition to be fuzzy.

It is therefore an object of the invention to provide a method of producing a halftone image which permits control of the visual characteristics of the display image.

This object is achieved by the method claimed in claim 1.

EP—A—33 106 discloses a technique wherein pixels are formed from multiple tone components. However, for each pixel this prior art selects the number of tone components of each value according to the adjacent pixel information, thereby adjusting the average tone of the pixel. By contrast, the present invention does not alter or select the tone values according to adjacent pixel information, but instead simply orders the tone components without changing the average tone of the pixel. Furthermore, this prior art is concerned with the drawing of lines rather than half-tone images, the latter being dealt with in the prior art separately from lines.

Although not limited thereto, the invention is particularly useful for maximizing the adjacency of similar tone components in adjacent pixels so as to reduce the number of component transitions in a picture and thus to optimize sharpness of tone transitions (e.g. black to white).

The invention may also be used to reduce the occurrence of optical aberrations in midtone fields.

An embodiment of the invention will now be described, by way of example, with reference to the accompanying drawings, wherein:

Fig. 1 is a truth table illustrating tone component ordering as a function of pixel coding,

Figs. 2A, 2B and 2C show, respectively, a representative image produced by use of the present invention, a prior art binary pixel image, and a prior art halftone pixel image.

Fig. 3 is a schematic diagram of a circuit for performing the method according to the invention.

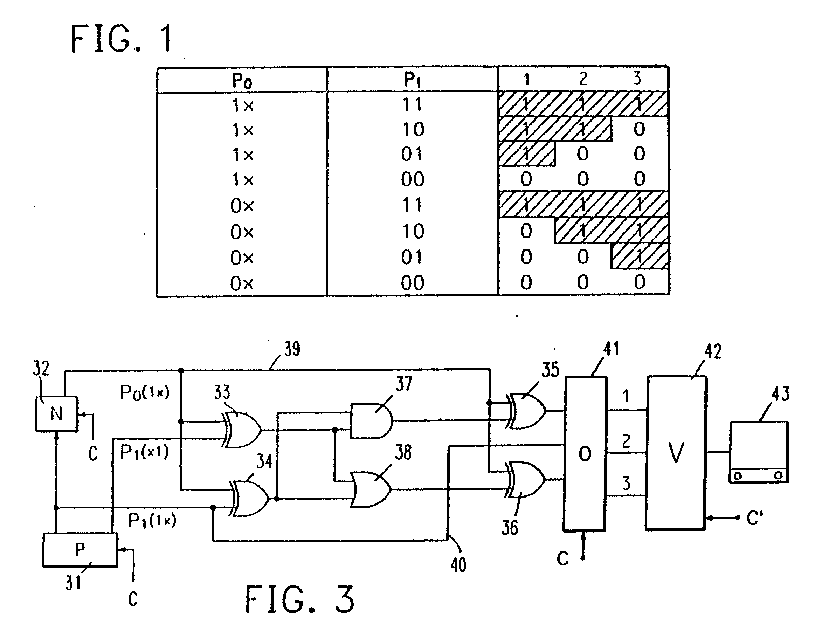

Fig. 1 is a sequence-controlled pixel configuration bit value truth table. The two bits of the coded "current" pixel $P_1$ (centre column) together with the high order bit of the coded "neighbour" pixel $P_0$ (left column) determines the order of the three tone components of the decoded current pixel (right column) as a function of the neighbour pixel. This in contrast to the prior art where the order is invariant.

Where all black or all white tone components are called for, the truth table shows that the value of the neighbour pixel does not matter. In midtones, however, the value of the neighbour pixel determines whether a white-right midtone or a black-right midtone is to be used for the current pixel. In a displayed picture the visual effect of the midtones in an open field is a grey which may be visually similar to the printed halftone; the visual effect of a midtone with its back (or white) portion matched to the black (or white) edge of its neighbour pixel is that of a sharp black-white transition.

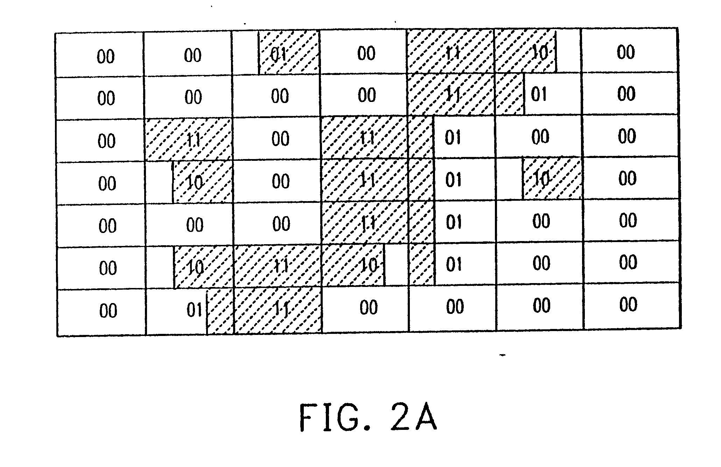

Fig. 2A illustrates a representative display pattern with the tone components of each pixel ordered according to the above truth table (Fig. 1). Note that there are few open field midtone (grey) areas; the black

2

and white display areas tend to be sharp. There is no distinguishable aberrational pattern within the midtone areas.

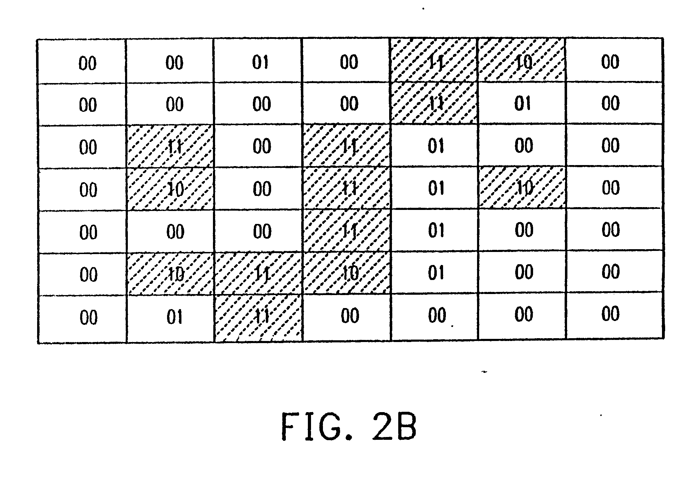

Fig. 2B illustrates the same pattern in simple binary (on/off) pixel format. The pattern, while generally sharp black or white, is quite lacking in resolution as contrasted to the pattern of Fig. 2A.

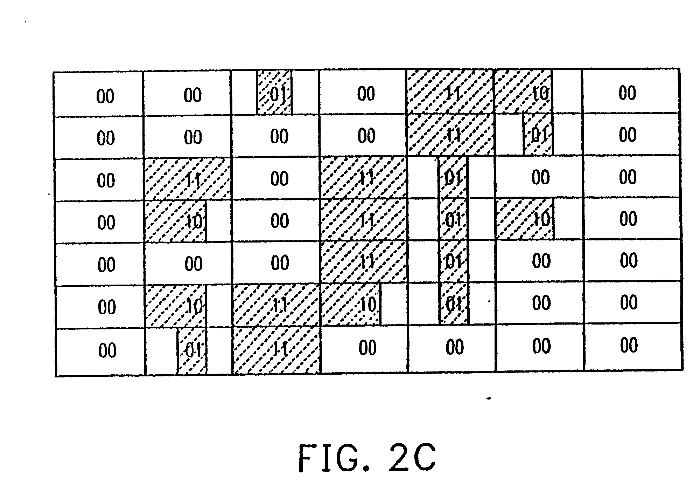

Fig. 2C illustrates the same pattern in three-component pixel configuration according to the prior art without tone component re-ordering. Note the relatively large islands of white and black in the open field midtone areas and the relatively high levels of transition fuzziness.

Fig. 3 is a block diagram of a preferred embodiment of a display system including a sequence-controlled pixel decoder which orders the tone components of each pixel according to the truth table of Figure 1. Input means includes a current pixel register 31, which provides to the pixel decoder the two-bit coded signals defining the current pixel. The high order bit of the current pixel register 31 is also provided as an input to a neighbour pixel register 32, which provides a one-pixel delay.

First, second, third and fourth exclusive-OR circuits 33, 34, 35 and 36, together with AND circuit 37 and OR circuit 38, and connections 39 and 40, complete the sequence-controlled decoder. By inspection it will be seen that for each coded pixel $P_1$, these logical devices provide decoded tone component definition signals 1, 2, 3 as shown in Figure 1 to an output register 41. Output register 41 in turn provides the pixel tone component definition signals for use by a video data selection mechanism 42, which may be one of various known types. Clock signals C control timing through the sequence-controlled pixel decoder. For simple raster scan video presentation 43, the clock may be set to control serial data flow to the output by a clock signal C, whereupon a different clock signal C' takes over to control the video.

Parallel presentation of pixels merely requires a larger input register 31 and either scanning means to convert to serial format, or replication of the sequence-controlled pixel decoder. In such a replicated decoder for each current pixel the neighbour pixel is available from the register 31 at a neighbouring position, and simple logic to gate the high order bit of the neighbour pixel along connector 39 eliminates the need for the register 32.

It is obvious that various inversions and complications of this embodiment might be made to accomplish variations in the desired result, depending upon the choice of white-right or black-right, number of tone components per decoded pixel, and whether a sharp black is desired or not. It might, for example, be advantageous in some circumstances to have stairstep edge patterns or fuzzy edges rather than to stifle them. Controlling pixel component ordering according to pixel sequence is the subject matter of this invention, not the details of the selected truth table.

Midtones (and tones) may be grey (and white or black) or may be colour tones in colour displays.

Sequence may be time sequence, and in the usual video presentation is bit serial in time. Sequence may alternatively be presentational, as in the first, second, . . . nth pixel in a row, even though the whole row might be presented in parallel.

**Claim**

A method of providing a halftone image wherein each pixel comprises a plurality of tone components whose tone values are defined by a multi-bit code, characterised by ordering the tone components of each pixel, without changing the average tone of the pixel, as a function of the code of an immediately adjacent pixel.

**Patentanspruch**

Verfahren zur Schaffung eines Halbtonbildes, bei welchem jedes Bildelement eine Anzahl von Tonkomponenten umfaßt, deren, Tonwerte durch einen Mehrbit-Code definiert sind, gekennzeichnet, durch das Ordnen der Tonkomponenten eines jeden Bildelements, ohne Änderung des mittleren Tons des Bildelements, als eine Funktion des Codes eines unmittelbar benachbarten Bildelements.

**Revendication**

Un procédé pour produire une image tramée dans laquelle chaque pixel comprend un ensemble de composantes de teinte dont les valeurs de teinte sont définies par un code à plusieurs bits, caractérisé en ce qu'on ordonne les composantes de teinte de chaque pixel, sans changer la teinte moyenne du pixel, en fonction du code d'un pixel immédiatement adjacent.

FIG. 1

0 109 005

| $P_0$ | $P_1$ | 1 | 2 | 3 |
|-------|-------|---|---|---|
| 1× | 11 | 1 | 1 | 1 |
| 1× | 10 | 1 | 1 | 0 |
| 1× | 01 | 1 | 0 | 0 |
| 1× | 00 | 0 | 0 | 0 |
| 0× | 11 | 1 | 1 | 1 |
| 0× | 10 | 0 | 1 | 1 |
| 0× | 01 | 0 | 0 | 1 |
| 0× | 00 | 0 | 0 | 0 |

FIG. 3

FIG. 2A

| 00 | 00 | 01 | 00 | 11 | 10 | 00 |
|----|----|----|----|----|----|----|
| 00 | 00 | 00 | 00 | 11 | 01 | 00 |
| 00 | 11 | 00 | 11 | 01 | 00 | 00 |
| 00 | 10 | 00 | 11 | 01 | 10 | 00 |
| 00 | 00 | 00 | 11 | 01 | 00 | 00 |
| 00 | 10 | 11 | 10 | 01 | 00 | 00 |
| 00 | 01 | 11 | 00 | 00 | 00 | 00 |

FIG. 2B

0 109 005

| 00 | 00 | 01 | 00 | 11 | 10 | 00 |
|----|----|----|----|----|----|----|
| 00 | 00 | 00 | 00 | 11 | 01 | 00 |
| 00 | 11 | 00 | 11 | 01 | 00 | 00 |
| 00 | 10 | 00 | 11 | 01 | 10 | 00 |
| 00 | 00 | 00 | 11 | 01 | 00 | 00 |
| 00 | 10 | 11 | 10 | 01 | 00 | 00 |
| 00 | 01 | 11 | 00 | 00 | 00 | 00 |

FIG. 2C

0 109 005